# EUROPEAN PATENT SPECIFICATION

(11) **EP 1 839 947 B1**
(45) Date of publication and mention of the grant of the patent: **29.10.2008**
(21) Application number: 07101865.9
(22) Date of filing: 07.02.2007
(51) Int. Cl.: B60Q 9/00

(54) **Headlight turn-off-forgetting prevention device**
Vorrichtung zum Verhindern des Vergessens des Ausschaltens der Scheinwerfer
Dispositif pour éviter d'oublier d'éteindre les phares

(30) Priority: 31.03.2006 JP 2006098996
(43) Date of publication of application: 03.10.2007
(73) Proprietor: HONDA MOTOR CO., LTD., Tokyo 107-8556 (JP)
(72) Inventor: Onozuka, Tadashi, Saitama 351-0193 (JP); Konno, Takeshi, Saitama 351-0193 (JP)
(74) Representative: Rupp, Christian

(56) References cited:
- EP-A- 0 952 036
- EP-A- 1 647 941
- JP-A- 5 278 516
- JP-A- 9 290 684
- JP-A- 2001 164 807
- JP-A- 2005 023 735
- US-A1- 2005 184 862
- US-B1- 6 259 362

## Description

The present invention relates to a headlight turn-off-forgetting prevention device, and more particularly to a headlight turn-off-forgetting prevention device which can prevent the turn-off forgetting of a headlight which occurs in a motorcycle which adopts an electronic key system.

Conventionally, various kinds of alarm devices which help a rider to drive a motorcycle stably have been studied. In JP 5 155 312, there is disclosed a key-removing-forgetting prevention device which, when the rider gets off from a seat of the motorcycle and stands a parking stand without removing an ignition key from a key cylinder which constitutes a main switch after changing over the main switch from an ON state to other state (an OFF state, a handle lock state) at the time of parking the motorcycle, notifies such a state to the rider by alarming. Due to such a constitution, it is possible to prevent the occurrence of a situation that the rider leaves a vehicle while inserting the ignition key into the key cylinder.

US 2005/0184862 A1 discloses an operational omission alarm system for a vehicle which includes an alarm apparatus, a terminal device and a central server. The alarm apparatus may determine whether at least one operational omission remains after a user of the vehicle has left the vehicle. If this is the case, an alarm signal is sent to a network. Accordingly, a central server records the alarm signal and notifies the user by means of a terminal device.
EP 0952036 A discloses a vehicle alarm system for a vehicle provided with an engine stopping/ starting control system which notifies a user who just goes apart from the vehicle without turning off a main power source in case the engine is automatically stopped by the engine stopping/starting control system. Thereby, the control system includes a sitting switch for detecting whether or not a driver is sitting in a seat, and a headlamp/buzzer control unit for notifying a user.
Recently, an electronic key system which replaces an ignition key which is used at the time of operating a main switch with a radio portable transceiver has been popularly used. In the electronic key system, provided that a rider carries a portable transceiver having an ID code in common with a vehicle, the rider can start an engine by changing over the main switch to an ON state without inserting a key into the cylinder and, at the same time, in parking the vehicle, provided that the rider stops the engine by changing over the main switch to an OFF state, the rider can leave the vehicle without performing any further action.

On the other hand, in a vehicle which adopts a normally-lit-type headlight in which the headlight is turned on when the main switch is changed over to an ON state, when an engine is stopped using an emergency engine stop switch (kill switch) which immediately stops the engine by stopping the supply of electricity to an ignition plug, although the engine is stopped, a state that the headlight is lit is continued unless the main switch is changed over to an OFF state. Here, in the vehicle to which the above-mentioned electronic key system is applied, a rider does not feel any discomfort in leaving the vehicle without performing an operation to remove the ignition key from the key cylinder and hence, there exists a possibility that the rider forgets to turn off the headlight.

The prior art neither suggests nor discloses a technique for preventing a headlight turn-off forgetting phenomenon which is peculiar to a vehicle to which the above-mentioned electronic key system is applied.

It is an object of the invention to provide a headlight turn-off-forgetting prevention device which can overcome the above-mentioned task of the related art and can prevent the turn-off forgetting of the headlight which occurs in a motorcycle to which an electronic key system is applied.

To achieve the above-mentioned object, the invention is, a headlight turn-off-forgetting prevention device of a motorcycle which includes an electronic key system which allows an engine to start by changing over a main switch to an ON state when an ID code which is contained in transmitted electric waves transmitted from a portable transceiver and a predetermined ID code agree with each other, whereby the headlight is turned on when the main switch is changed over to an ON state, and wherein the headlight turn-off-forgetting prevention device further includes an engine stop switch and a side stand switch which immediately stop the engine when the engine stop switch or the side stand switch is changed over to an OFF state, a determination means which performs an affirmative determination when the engine stop switch or the side stand switch is changed over to an OFF state while the main switch is in an ON state, a communication means which tries the radio communication with the portable transceiver when an affirmative determination is made by these determination means, and an alarm means which beeps an alarm sound when transmitted electric waves from the portable transceiver cannot be received via the radio communication, and wherein the determination means further includes a voltage sensor which detects a battery voltage, and wherein the alarm means beeps an alarm sound immediately, when affirmative determination is made by these determination means and an output value of the voltage sensor is equal to or less than a predetermined value.

In a second aspect, the invention proposes a headlight turn-off-forgetting prevention device according to claim 1, wherein the headlight is turned off by automatically changing over the main switch to an OFF state when the transmitted electric waves from the portable transceiver are not received via the radio communication in spite of a trial of the radio communication with the portable transceiver.

According to invention, it is possible to beep the alarm sound when a fact that the engine is stopped while the headlight is held in a turn-ON state and a rider who carries the portable transceiver leaves the motorcycle is detected and hence, it is possible to notify the fact that the headlight is kept turned on to the rider and to ask the rider to turn off the headlight. Further, the fact that the rider leaves the motorcycle is detected when the radio communication with the portable transceiver becomes impossible and hence, it is possible to prevent the headlight turn off forgetting phenomenon peculiar to the vehicle to which the electronic key system is adopted by making use of the constitution of the electronic key system. Further, by adjusting the distance which allows the communication with the portable transceiver, it is possible to arbitrarily determine whether the alarm sound is to be beeped or not depending on the distance that the rider leaves away from the motorcycle.

Moreover, according to the invention, the determination means performs the affirmative determination when the engine stop switch or the side stand switch is changed over to an OFF state during a period in which the main switch is in an ON state and hence, it is possible to surely determine a fact that the engine is stopped while the headlight is held in a turn-ON state. Further, the communication means tries the radio communication with the portable transceiver when the output value of the voltage sensor which detects the battery voltage is equal to or less than a predetermined value, and the alarm means immediately beeps the alarm sound when a fact that the rider who carries the portable transceiver leaves the motorcycle is detected and hence, it is possible to smoothly notify the rider of the fact that there exists a large possibility that the battery runs out.

According to the second aspect of the invention, the main switch is changed over to an OFF state when the radio communication with the portable transceiver is tried and the transmitted electronic waves from the portable transceiver are not received via the radio communication and hence, it is possible to automatically turn off the headlight by detecting a fact that the rider who carries the portable transceiver moves to a position outside a range which allows the radio communication.
[Fig. 1] A perspective view of a motorcycle according to one embodiment of the invention.
[Fig. 2] A perspective view of a portable transceiver according to one embodiment of the invention.
[Fig. 3] A perspective view showing an arrangement of an engine stop switch according to one embodiment of the invention.
[Fig. 4] A front view of a main switch according to one embodiment of the invention.
[Fig. 5] A block diagram showing the constitution of a headlight turn-off-forgetting prevention device according to one embodiment of the invention.
[Fig. 6] A flowchart showing a control of an alarm buzzer operation according to one embodiment of the invention.
[Fig. 7] A flowchart showing a control of an alarm buzzer operation according to a second embodiment of the invention.
[Fig. 8] A perspective view showing one example of an arrangement position of an alarm buzzer.
[Fig. 9] A front view showing one example of the arrangement position of the alarm buzzer.
[Fig. 10] A perspective view showing one example of an arrangement position of an alarm buzzer.

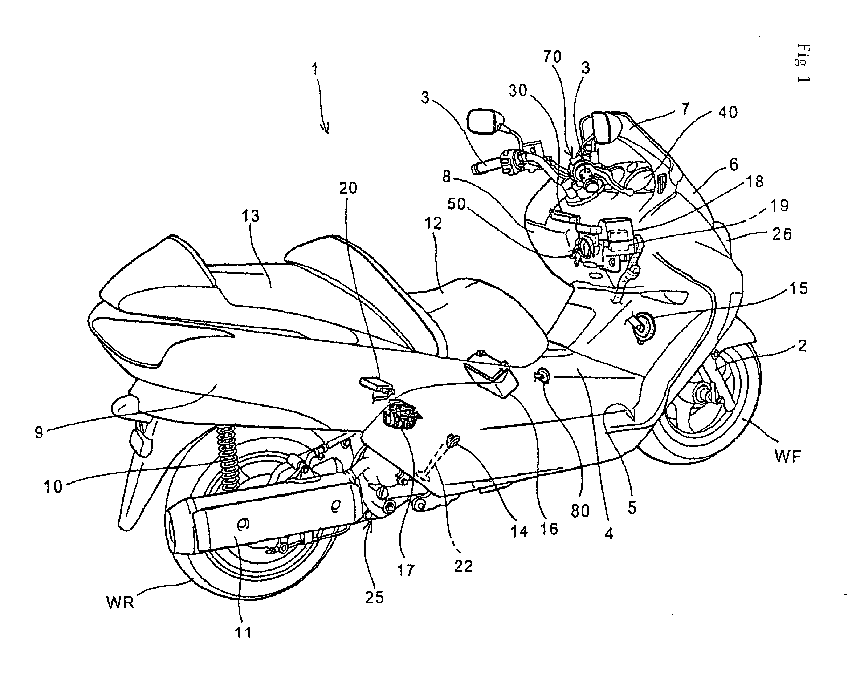

Hereinafter, a preferred embodiment of the invention is explained in conjunction with the drawings. Fig. 1 is a perspective view of a motorcycle 1 to which a headlight turn-off-forgetting prevention device according to a first embodiment of the invention is applied. In the drawing, to show essential parts which are arranged in the inside of a vehicle body, a portion of the motorcycle 1 is viewed in a see-through manner. The motorcycle 1 is a scooter-type motorcycle which includes a unit-swing-type power unit which incorporates a continuously variable transmission therein. Here, on lower end portions of a pair of left and right front forks 2,2 which is steered by a handle 3, a front wheel WF is pivotally supported in a rotatable manner. On a vehicle body rear side, a muffler 11 which exhausts a combustion gas of an engine is arranged and, at the same time, a unit swing 25 which pivotally supports a rear wheel WR which constitutes a drive wheel in a rotatable manner is mounted in a rocking manner by means of a rear cushion 10.

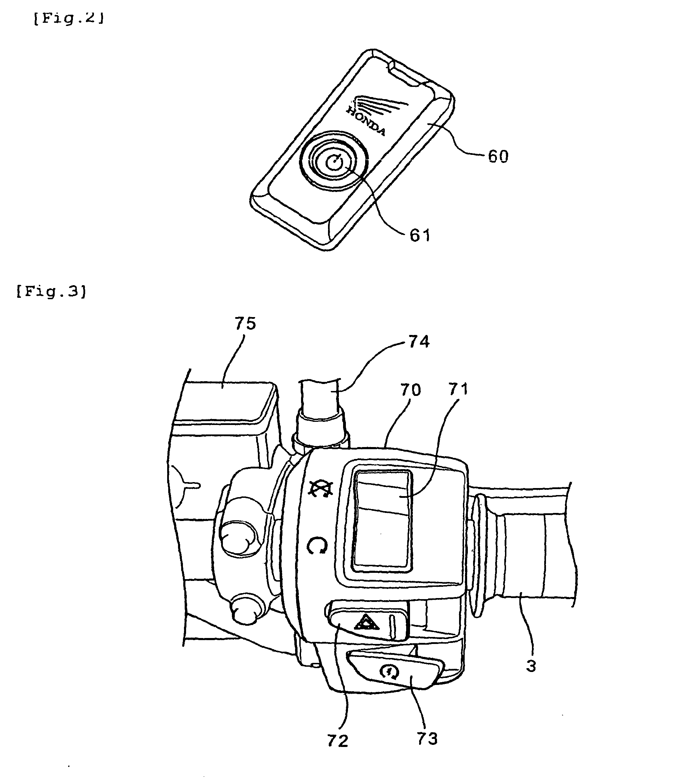

On a front cowl 6 which covers a vehicle body front side, a normally-lit-type headlight 26 which is turned on when a main switch 50 described later is changed over to an ON state is mounted. A wind screen 7 which straightens a traveling wind is mounted on an upper portion of the headlight 26. A meter unit 40 is arranged between the wind screen 7 and the handle 3, and a right switch box 70 to which an engine stop switch (kill switch) described later is provided is mounted on the right handle 3. To the motorcycle 1, an electronic key system which makes use of a portable transceiver (see Fig. 2) is applied, and a transmitting antenna 30 which transmits transmitted electric waves to the portable transceiver is mounted in the inside of a front panel 8 which is arranged to cover the front forks 2,2 from a vehicle-body rear side.

The main switch 50 is arranged in a state that only a dial portion of the main switch 50 which is operated by the rider is observed through an opening window formed in the front panel 8 and, at the same time, the main switch 50 is integrally formed with a handle lock module 18 in which a control unit 19 is housed. In the handle lock module 18, a lock pin (not shown in the drawing) for inhibiting the rotational operation of the handle 3 at the time of parking the motorcycle 1 is housed. The retractable lock pin is configured to be projected by rotating the main switch 50 to a predetermined position and to be engaged with an engagement hole which is formed in a stem shaft (not shown in the drawing) which connects the front forks 2 and the handle 3. Here, below the handle lock module 18, a horn 15 which constitutes an alarm device operated in response to a button manipulation of the rider is arranged.

A floor panel 4 which is arranged in front of leg portions of the rider forms a pair of left and right foot resting portions 5, 5 on both outsides of the vehicle body in the vehicle width direction. Below an open/close type front seat 12 which is arranged on a vehicle-rear-side of the floor panel 4, a battery 16 which supplies electricity to the headlight 26 and the like is arranged. In front of the battery 16, there is arranged an alarm buzzer 80 which notifies the turn-off forgetting of the headlight 26 to the rider by beeping an alarm sound when the headlight turn-off-forgetting prevention device according to the invention is operated.

In a space which is arranged below the rear seat 13 and is covered with the seat cowl 9, a receiving unit 20 which receives transmitted electric waves from a portable transceiver 60 and an ECU (engine control unit) 17 which is integrally formed with a throttle body are arranged. Further, on a support shaft (not shown in the drawing) of a side stand 22 which is mounted on a left portion of the vehicle body in a rockable manner and supports a vehicle body with a predetermined inclination angle at the time of parking the vehicle, a rotary side stand switch 14 which detects whether the side stand 22 is positioned at a projected position or a stored position is arranged. The side stand switch 14 is configured such that the side stand switch 14 assumes an ON state when the side stand 22 is positioned at the stored position, and the side stand switch 14 is changed over to an OFF state when the side stand 22 is positioned at the projected position.

Fig. 2 is a perspective view of the portable transceiver 60 according to one embodiment of the invention. In the portable transceiver 60, an ID code which is equal to a predetermined ID code stored in a vehicle body side is stored. The portable transceiver 60 is configured such that when both ID codes are collated, an operation to change over the main switch 50 to an ON state, an operation to open the front seat 12, an operation to open an accommodating box which is arranged in the front panel 8, and an operation to open a fuel-supply opening lid are allowed. When the rider who carries the portable transceiver 60 tries to perform the above-mentioned various kinds of operations, a radio communication between the vehicle body and the portable transceiver 60 is performed using the transmitting antenna 30 and the receiving unit 20, and the collation between the ID code which is contained in the transmitted electric waves from the portable transceiver 60 and the predetermined ID code which is stored in the control unit 19 is performed. Further, the portable transceiver 60 includes a communication button 61 which arbitrarily turns on/off the radio communication with the vehicle body side. In this embodiment, when the rider who carries the portable transceiver 60 leaves the motorcycle 1 by a predetermined distance or more, the above-mentioned various kinds of operations are automatically inhibited. However, when the radio communication is changed over to an OFF state by manipulating the communication button 61, it is possible to inhibit the various kinds of operations even when the rider is present within the predetermined distance from the vehicle.

Fig. 3 is a front view of the right switch box 70 which is mounted on a right side of the handle 3. In the vicinity of the right switch box 70 which is configured to wrap the pipe-shaped handle 3, a stay 74 of a right back miller and a reservoir tank 75 which accumulates the brake fluid which is used in a hydraulic brake of the front wheel WF are arranged. In the right switch box 70, an engine stop switch 71 which immediately stops the engine, a hazard lamp button 72 which operates a hazard lamp and a starter button 73 which is pushed for starting the engine by driving a self-starting motor after changing over the main switch 50 to an ON state are arranged. The engine stop switch 71 is constituted of a vertically changeover switch which adopts a seesaw system. The engine stop switch 71 is an emergency-use switch which immediately stops the engine by stopping the supply of electricity to an ignition plug when the switch is changed over to an upward position from a normally downward position. In this specification, the normally downward position is defined as an ON state and the upward position which immediately stops the engine is defined as an OFF state. Here, a normally-lit system in which the headlight 26 is lit when the main switch 50 is changed over to an ON state is applied to the motorcycle 1 and hence, the motorcycle 1 does not include an on/off switch of the headlight 26.

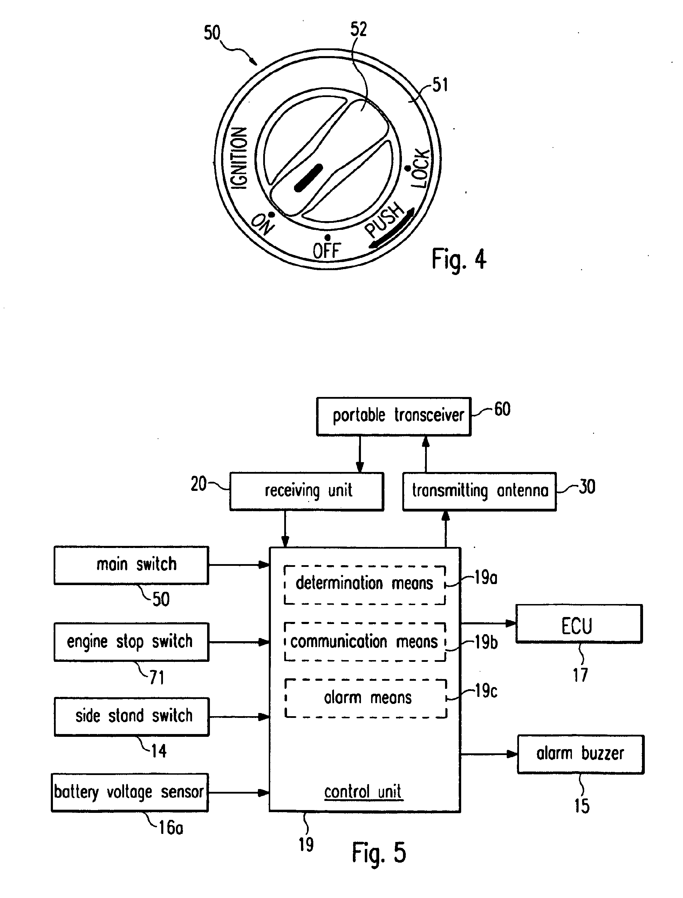

Fig. 4 is a front view of the main switch 50. A dial 52 which is rotatably and pivotally supported on an annular portion 51 which is fixed to the vehicle body side is configured such that the rotational operation of the dial 52 in the clockwise direction from an OFF position or a handle lock position is inhibited when the ID code of the portable transceiver 60 is not collated by the control unit 19. Accordingly, unless the rider carries the portable transceiver 60 with him, the rider cannot rotate the dial 52 to an ON position. Further, in a state that the ID code of the portable transceiver 60 is not collated, also a drive instruction of the ECU 17 (see Fig. 1) is not transmitted to the engine and hence, double locks are provided before the engine is started. Here, the changeover of the dial 52 from the OFF position to the handle lock position is performed by rotating the dial 52 in the counterclockwise direction while pushing the dial 52. Here, the lock pin is projected from the handle lock module 18 so as to inhibit the rotational operation of the handle 3.

Fig. 5 is a block diagram showing the constitution of the headlight turn-off-forgetting prevention device according to one embodiment of the invention. The headlight turn-off-forgetting prevention device according to this embodiment cannot perform the radio communication with the portable transceiver 60 when the engine is stopped while the headlight 26 is held in a turn-ON state. That is, the headlight turn-off-forgetting prevention device is configured to notify the turn-off-forgetting of the headlight to the rider by beeping the alarm sound when it is determined that the rider moves outside a communication allowable range of the portable transceiver 60.

An ON/OFF signal of the main switch 50, an ON/OFF signal of the engine stop switch 71, an ON/OFF signal of the side stand switch 14 and an output value of a battery voltage sensor 16a which detects a voltage of the battery 16 are inputted into the control unit 19. Further, the control unit 19 is configured to transmit a transmission electric wave which asks the portable transceiver 60 to transmit the transmitted electric waves to the portable transceiver 60 using the transmitting antenna 30 and to receive the transmitted electric waves from the portable transceiver 60 using the receiving unit 20. Further, the control unit 19 is configured to allow the rotational operation of the main switch 50 and, at the same time, to give the permission to drive the ECU 17 when the ID code which is stored in the portable transceiver 60 and the ID code which is stored in the control unit 19 agree with each other. The control unit 19 can detect a driving state of the engine based on a drive signal of the ECU 17. Further, the side stand switch 14 according to this embodiment is, when the side stand 22 is rotated to the projected position during the engine is driven so that the side stand switch 14 is changed over to an OFF state, configured to immediately stop the engine for preventing the traveling of the vehicle in a state that the side stand 22 is projected. Such an engine-stop control performed by the side stand switch 14 stops only the engine by stopping the supply of electricity to the ignition plug in the same manner as the engine stop switch 71.

Further, the control unit 19 includes, in the inside thereof, a determination means 19a which determines whether the engine is stopped while a headlight is held in a turn-ON state or not, a communication means 19b which tries the communication with the portable transceiver 60 when an affirmative determination is made by the determination means 19a, and an alarm means 19c which operates the alarm buzzer 80 when it is determined that the communication with the portable transceiver 60 by the communication means 19b is impossible.

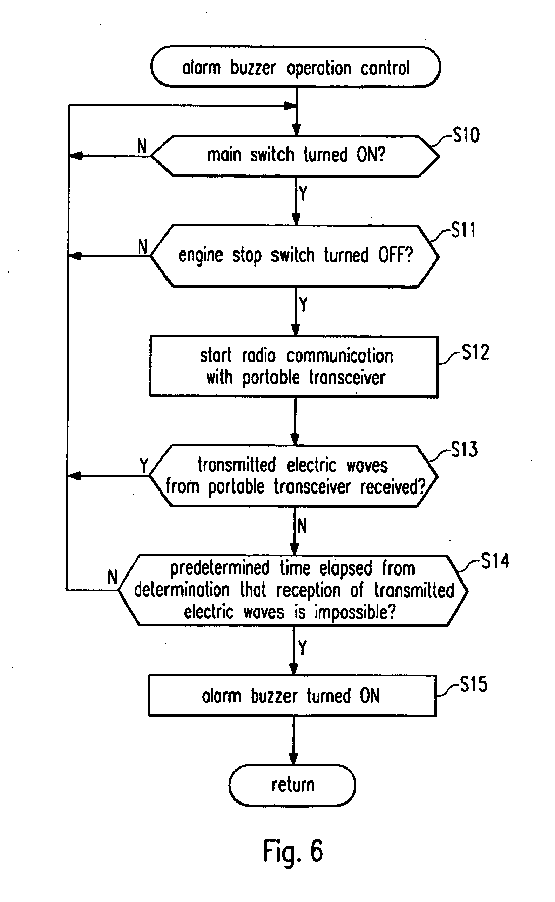

Fig. 6 is a flowchart showing steps for controlling the alarm buzzer operation according to one embodiment of the invention. The turn-off forgetting of the headlight of the motorcycle 1 to which the electronic key system is applied is, since the rider can leave the vehicle without performing an operation to remove the ignition key from the key cylinder, generated when the rider forgets to change over the main switch 50 to an OFF state in stopping the engine using the above-mentioned emergency-use switch. The flowchart shown in Fig. 6 is applicable to a case in which the engine is stopped by the engine stop switch 71.

In step S10, the control unit 19 determines whether the main switch 50 assumes an ON state or not, and when it is determined that the main switch 50 assumes an ON state, the processing advances to step S11. In step S11, the determination means 19a of the control unit 19 determines whether the engine stop switch 71 assumes an OFF state or not, and when it is determined that the engine stop switch 71 assumes an OFF state, the processing advances to step S12. In step S12, the radio communication among the transmitting antenna 30, the receiving unit 20 and the portable transceiver 60 is started by the communication means 19b. In step S13 which succeeds step S12, it is determined whether the transmitted electric waves from the portable transceiver 60 are received or not after starting the radio communication. When it is determined that the receiving of the transmitted electric waves is impossible, that is, when it is determined that the rider who carries the portable transceiver 60 moves outside the communication allowable range, the processing advances to step S14. Here, the communication allowable range may be, for example, arbitrary set within a range from 1 to 10m.

In step S14, it is determined whether a predetermined time elapses or not using a timer which starts counting when the determination in step S13 is negative. When it is determined that a predetermined time elapses, the processing advances to step S15. A predetermined time may be, for example, arbitrary set within a range from 2 to 30 seconds. Further, in step S15, the alarm buzzer 80 is operated by the alarm means 19c so as to notify the turn-off forgetting of the headlight to the rider who leaves the vehicle.

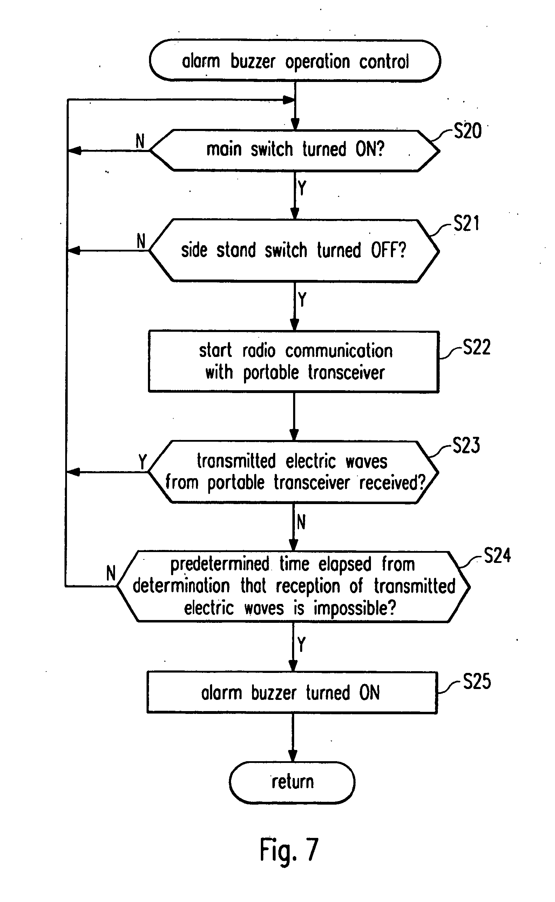

Fig. 7 is a flowchart showing steps for controlling the alarm buzzer operation according to the second embodiment of the invention. The flowchart is applicable when the engine is stopped by the side stand switch 14. In step S20, it is determined whether the main switch 50 assumes an ON state or not. When it is determined that the main switch 50 assumes an ON state, the processing advances to step S21. In step S21, it is determined whether the side stand switch 14 assumes an OFF state or not by the determination means 19a of the control unit 19. When it is determined that the side stand switch 14 assumes an OFF state, the processing advances to step S22. In step S22, the radio communication with the portable transceiver 60 is started by the communication means 19b. In step S23 which succeeds step S22, it is determined whether the transmitted electric waves from the portable transceiver 60 are received or not after starting the radio communication. When it is determined that the receiving of the transmitted electric waves is impossible, the processing advances to step S24. In step S24, it is determined whether a predetermined time elapses or not using a timer which starts counting when the determination in step S23 is negative. When it is determined that a predetermined time elapses, the processing advances to step S25. Further, in step S25, the alarm buzzer 80 is operated by the alarm means 19c.

Here, in the control of the alarm buzzer operation shown in Fig. 6 and Fig. 7, after it is determined that the engine is stopped while the headlight is held in a turn-ON state, before starting the radio communication with the portable transceiver 60, it may be determined whether the output value of the battery voltage sensor 16a (see Fig. 5) is equal to or less than a predetermined value or not. Due to such a constitution, when there exists a possibility that an electromotive force necessary for starting the engine cannot be supplied to the self starting motor due to simple turn-off forgetting of the headlight for a short time because of the battery voltage lower than the predetermined value due to insufficient charging or the like, it is possible to perform a control such as an immediate operation of the alarm buzzer 80 when it is determined that the rider leaves the vehicle without waiting for a lapse of a predetermined time. Accordingly, it is possible to surely prevent the battery run-out attributed to the turn-off forgetting of the headlight 26.

Here, the headlight turn-off forgetting prevention device according to the invention may be configured such that the headlight is turned off by automatically changing over the main switch 50 to an OFF state when the headlight turn-off forgetting prevention device tries to perform the radio communication with the portable transceiver 60 and cannot receive the transmitted electric waves from the portable transceiver 60 via the radio communication. Due to such a constitution, it is possible to automatically turn off the headlight by detecting a fact that the rider moves outside a range which allows the radio communication with the motorcycle.

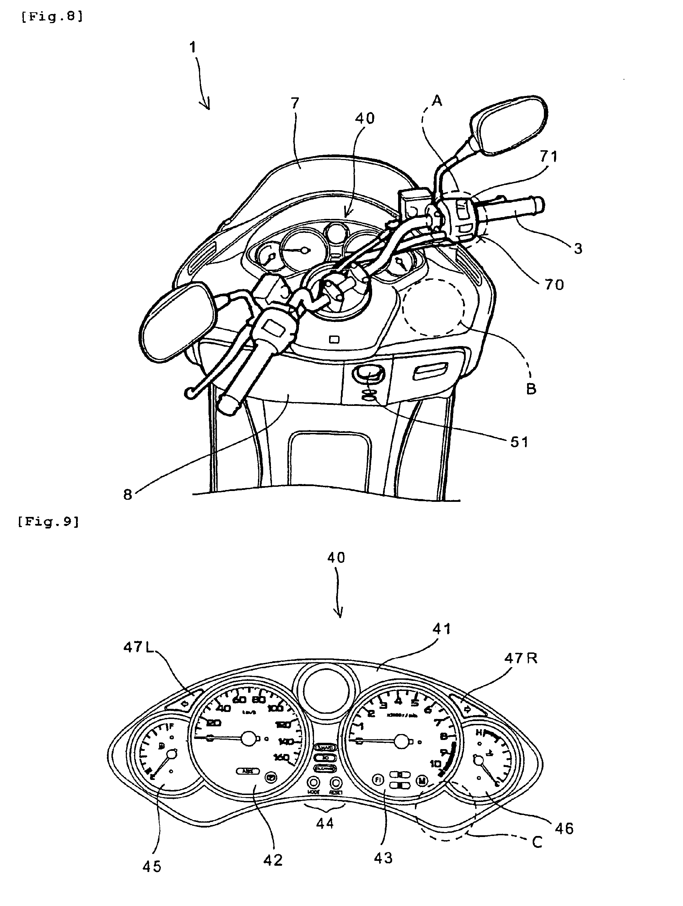

Fig. 8, Fig. 9 and Fig. 10 are explanatory views showing an example of the arrangement position of the alarm buzzer 80. Fig. 8 is a perspective view showing the handle 3 of the motorcycle 1 and the vicinity thereof. Symbols which are equal to the previously-used symbols indicate identical or similar parts. The alarm buzzer 80 may be, for example, arranged in the inside (a portion indicated by symbol A in the drawing) of the right switch box 70 in which the engine stop switch 71 is arranged. By arranging the alarm buzzer 80 at such a position, the alarm buzzer 80 is arranged at a high position in a state that the handle 3 is steered to a left side and hence, it is possible to easily transmit the sound of the alarm buzzer to a remote place. Particularly, the handle 3 is frequently steered to a left side when the rider parks the vehicle body using a vehicle-body-left-side side stand 22 in a state that the vehicle body is inclined leftwardly and hence, the above-mentioned constitution is preferable. Further, the alarm buzzer 80 may be provided to a flat surface (a portion indicated by symbol B in the drawing) which is arranged on a right side in the vehicle width direction of a proximal portion of the handle 3 in which a meter unit 40 is embedded. By arranging the alarm buzzer 80 at such a position, it is possible to mount a large-sized alarm buzzer on the vehicle.

Fig. 9 is a front view of the meter unit 40. The meter unit 40 which is arranged between the handle 3 and the wind screen 7 is a four-tandem type meter which arranges a speedometer 42 and a tachometer 43 having large diameters at a center of a base 41 thereof and arranges a fuel gauge 45 and a water temperature gauge 46 having small diameters at both outsides in the vehicle width direction respectively. Between the speedometer 42 and the tachometer 43, various kinds of alarm lamps and manipulation buttons 44 are concentrically mounted. At both lateral outsides of the speedometer 42 and the tachometer 43, blinker operation lamps 47L, 47R which blink in synchronism with the blinking of the left and right blinkers are arranged. Further, the alarm buzzer 80 maybe, for example, arranged at a lower position (a portion indicated by symbol C in the drawing) between the tachometer 43 and the water temperature gauge 46 in an embedded manner. By arranging the alarm buzzer 80 at such a position, it is possible to effectively use an extra space of the meter unit 40 and, at the same time, the alarm buzzer 80 is incorporated in the meter unit 40 and hence, it is unnecessary to newly consider a wiring position of a wiring cord of the alarm buzzer 80 whereby it is possible to mount the alarm buzzer 80 on the vehicle body without increasing operational man-hours.

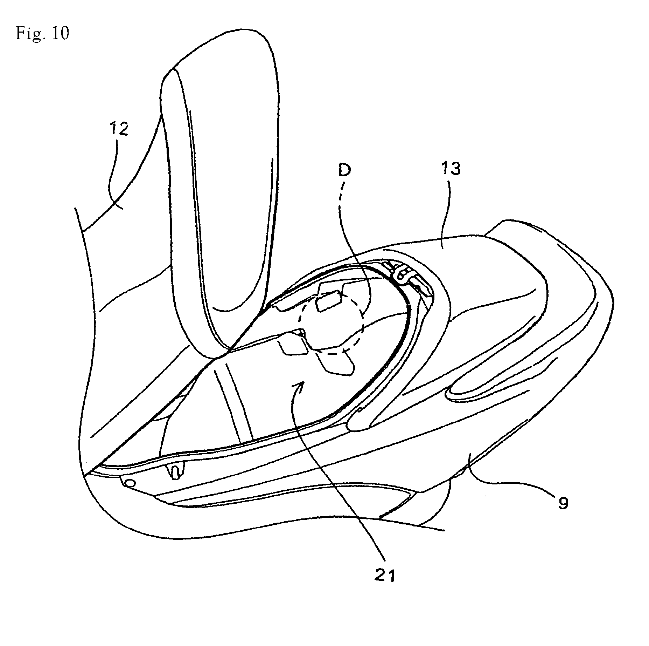

Fig. 10 is a perspective view showing the front seat 12 and the vicinity thereof. The alarm buzzer 80 may be, for example, provided to a wall surface (a portion indicated by symbol D in the drawing) of a storing space 21 which is formed below the open/close type front seat 12. By arranging the alarm buzzer 80 at such a position, even when the alarm buzzer 80 is mounted on the vehicle later as an optional part, a mounting operation of the alarm buzzer 80 can be easily performed, and it is unnecessary to give the waterproof property and the dustproof property to the alarm buzzer. Further, it is possible to prevent a person other than the rider who carries the portable transceiver 60 from touching the alarm buzzer 80. Here, the alarm buzzer 80 may be configured such that the alarm buzzer 80 is also used as the horn 15 (see Fig. 1) which functions as the alarm device operated by the bottom manipulation of the rider.
- 14:: side stand switch
- 16a:: battery voltage sensor
- 17:: ECU
- 19:: control unit
- 19a:: determination means
- 19b:: communication means
- 19c:: alarm means
- 20:: receiving unit
- 30:: transmitting antenna
- 50:: main switch
- 60:: portable transceiver
- 71:: engine stop switch
- 80:: alarm buzzer

## Claims

1. A headlight turn-off forgetting prevention device of a motorcycle which includes an electronic key system which allows an engine to start by changing over a main switch (50) to an ON state when an ID code which is contained in transmitted electric waves transmitted from a portable transceiver (60) and a predetermined ID code agree with each other, whereby the headlight is turned on when the main switch is changed over to an ON state, and
wherein the headlight turn-off-forgetting prevention device further includes an engine stop switch (71) and a side stand switch (14) which immediately stop the engine when the engine stop switch (71) or the side stand switch (14) is changed over to an OFF state,
a determination means (19a) which performs an affirmative determination when the engine stop switch (71) or the side stand switch (14) is changed over to an OFF state while the main switch (50) is in an ON state ,
a communication means (19b) which tries the radio communication with the portable transceiver (60) when an affirmative determination is made by these determination means (19a), and
an alarm means (19c) which beeps an alarm sound when transmitted electric waves from the portable transceiver (60) cannot be received via the radio communication, and
wherein the determination means (19a) further includes a voltage sensor (16a) which detects a battery voltage, and wherein the alarm means (19c) beeps an alarm sound immediately when affirmative determination is made by these determination means (19a) and an output value of the voltage sensor (16a) is equal to or less than a predetermined value.

2. A headlight turn-off-forgetting prevention device according to claim 1, wherein
the headlight is turned off by automatically changing over the main switch 50 to an OFF state , when the transmitted electric waves from the portable transceiver (60) are not received via the radio communication in spite of a trial of the radio communication with the portable transceiver (60).

## Patentansprüche

1. Motorradscheinwerfer-Ausschaltsicherungsvorrichtung, die ein elektronisches Schlüsselsystem beinhaltet, das gestattet, einen Motor durch Umschalten eines Hauptschalters (50) in einen EIN-Zustand anzulassen, wenn ein ID-Code, der in übertragenen elektrischen Wellen beinhaltet ist, die von einer tragbaren Sende-Empfangs-Vorrichtung (60) übertragen werden, und ein vorherbestimmter ID-Code miteinander übereinstimmen, wobei der Scheinwerfer eingeschaltet wird, wenn der Hauptschalter in einen EIN-Zustand umgeschaltet wird, und
worin die Motorradscheinwerfer-Ausschaltsicherungsvorrichtung ferner einen Motorausschalter (71) und einen Seitenständerschalter (14) beinhaltet, die den Motor unverzüglich ausschalten, wenn der Motorausschalter (71) oder der Seitenständerschalter (14) in einen AUS-Zustand umgeschaltet werden,
ein Bestimmungsmittel (19a), das eine positive Entscheidung vollzieht, wenn der Motorausschalter (71) oder der Seitenständerschalter (14) in einen AUS-Zustand umgeschaltet werden, während sich der Hauptschalter (50) in einem EIN-Zustand befindet,
ein Kommunikationsmittel (19b), das eine Funkverbindung mit der tragbaren Sende-Empfangs-Vorrichtung (60) versucht, wenn eine positive Entscheidung durch das Bestimmungsmittel (19a) getroffen wurde, und
ein Alarmmittel (19c), das einen Alarmton ausgibt, wenn übertragene elektrische Wellen von der tragbaren Sende-Empfangs-Vorrichtung (60) nicht über die Funkverbindung empfangen werden können, und
worin das Bestimmungsmittel (19a) ferner einen Spannungssensor (16a) beinhaltet, der eine Batteriespannung detektiert, und worin das Alarmmittel (19c) unverzüglich einen Alarmton ausgibt, wenn eine positive Entscheidung durch das Bestimmungsmittel (19a) getroffen wurde und ein Ausgangswert des Spannungssensors (16a) gleich oder kleiner als ein vorherbestimmter Wert ist.

2. Motorradscheinwerfer-Ausschaltsicherungsvorrichtung gemäß Anspruch 1, worin der Scheinwerfer durch automatisches Umschalten des Hauptschalters(50)in einen AUS-Zustand ausgeschaltet wird, wenn die übertragenen elektrischen Wellen von der tragbaren Sende-Empfangs-Vorrichtung (60) trotz eines Versuchs der Funkverbindung mit der tragbaren Sende-Empfangs-Vorrichtung (60) nicht über die Funkverbindung empfangen werden.

## Revendications

1. Dispositif permettant d'éviter d'oublier d'éteindre le phare d'une motocyclette qui comprend un système de clé électronique qui permet à un moteur de démarrer en faisant passer un interrupteur principal (50) dans un état ON lorsqu'un code ID qui est contenu dans des ondes électriques transmises depuis un émetteur/récepteur portable (60) et un code ID prédéterminé concordent l'un avec l'autre, moyennant quoi le phare est allumé lorsque l'interrupteur principal est passé dans un état ON, et
dans lequel le dispositif permettant d'éviter d'oublier d'éteindre le phare comprend en outre un interrupteur d'arrêt du moteur (71) et un interrupteur de béquille latérale (14) qui arrêtent immédiatement le moteur lorsque l'interrupteur d'arrêt du moteur (71) ou l'interrupteur de béquille latérale (14) est passé à un état OFF,
un moyen de détermination (19a) qui effectue une détermination affirmative lorsque l'interrupteur d'arrêt du moteur (71) ou l'interrupteur de béquille latérale (14) est passé à un état OFF tandis que l'interrupteur principal (50) est dans un état ON,
un moyen de communication (19b) qui tente la communication radio avec l'émetteur/récepteur portable (60) lorsqu'une détermination affirmative est effectuée par ce moyen de détermination (19a), et
un moyen d'alarme (19c) qui émet une alarme sonore lorsque les ondes électriques transmises depuis l'émetteur/récepteur portable (60) ne peuvent être reçues par la communication radio, et
dans lequel le moyen de détermination (19a) comprend en outre un détecteur de tension (16a) qui détecte une tension de batterie, et dans lequel le moyen d'alarme (19c) émet une alarme sonore immédiatement, lorsqu'une détermination affirmative est effectuée par ce moyen de détermination (19a) et une valeur de sortie du détecteur de tension (16a) est égale ou inférieure à une valeur.prédéterminée.

2. Dispositif permettant d'éviter d'oublier d'éteindre le phare selon la revendication 1, dans lequel
le phare est éteint en faisant automatiquement passer l'interrupteur principal 50 à un état OFF lorsque les ondes électriques transmises depuis l'émetteur/récepteur portable (60) ne sont pas reçues par la communication radio malgré une tentative de communication radio avec l'émetteur/récepteur portable (60).
